# EUROPEAN PATENT APPLICATION

(11) **EP 4 503 214 A1**
(43) Date of publication of application: **05.02.2025**
(21) Application number: 23204910.6
(22) Date of filing: 20.10.2023
(51) Int. Cl.: H01M 10/04, H01M 10/0587

(54) **CORE FOR WINDING SECONDARY BATTERY SEPARATOR FILM**

(30) Priority: 02.08.2023 KR 20230100827
(71) Applicant: Lee, Kye-seol, Seoul (KR)
(72) Inventor: Lee, Kye-seol, Seoul (KR)
(74) Representative: Wunderlich & Heim Patentanwälte PartG mbB

(57) **Abstract**

Disclosed is a core for winding a secondary battery separator film used to stably wind an electrode assembly. The core includes an upper core and a lower core, wherein a rectangular protrusion is formed on a lower surface of the upper core, a rectangular groove is formed in an upper surface of the lower core, when a separator film is wound, the upper core and the lower core move toward the center from opposite sides, the film is located between the protrusion of the upper core and the groove of the lower core, the upper core and the lower core are fastened to each other, and the film is wound on the core by rotation of the core.

## Description

### BACKGROUND OF THE INVENTION

### Field of the Invention

The present invention relates to a core for winding a secondary battery separator film used to stably wind an electrode assembly, and more particularly to a core for winding a secondary battery separator film, the core including an upper core and a lower core, wherein a protrusion is formed on a lower surface of the upper core, a groove is formed in an upper surface of the lower core, when a separator film is wound, the upper core and the lower core move toward the center from opposite sides, the upper core and the lower core are fastened to each other in the state in which the film is interposed between the protrusion of the upper core and the groove of the lower core, and the separator film is wound on the core as the result of the core being rotated by a rotating body.

### Description of the Related Art

In general, with the development of technology and increasing demand for mobile devices, the demand for secondary batteries as an energy source is increasing rapidly, and among secondary batteries, lithium secondary batteries with high energy density and discharge voltage are commercially available.

Depending on the shape of a battery case, secondary batteries are classified into a cylindrical battery having an electrode assembly mounted in a cylindrical metal can, a prismatic battery having an electrode assembly mounted in a prismatic metal can, and a pouch type battery having an electrode assembly mounted in a pouch type case made of an aluminum laminate sheet.

The electrode assembly is a power generating element having a structure in which a positive electrode, a separator, and a negative electrode are stacked and capable of being charged and discharged. The electrode assembly is classified as a jelly-roll type electrode assembly, in which a long sheet type positive electrode having an active material applied thereto and a long sheet type negative electrode having an active material applied thereto are wound in the state in which a separator is interposed therebetween, or a stacked type electrode assembly, in which a plurality of positive electrodes having a predetermined size and a plurality of negative electrodes having a predetermined size are sequentially stacked in the state in which separators are interposed respectively therebetween.

The jelly-roll type electrode assembly has the advantages of easy manufacture and high energy density per weight, and a process of manufacturing the jelly-roll type electrode assembly includes a process of inserting a core into an end of a stack of the positive electrode, the separator, and the negative electrode, winding the stack into a cylindrical shape, and removing the core.

A conventional core is a rod-shaped member, which is separated by a length corresponding to the width of a sheet type stack such that the stack can be inserted into one end that extends to a predetermined length, and the core is configured to have a structure in which two semicircles face each other when viewed in section. When the electrode assembly is wound, therefore, there is a problem that the two semicircles twist each other due to high-speed rotation, and a mis-winding phenomenon occurs in which each sheet is incorrectly wound around the other after winding, whereby eccentricity of the electrode assembly is caused.

Conventionally, therefore, a phenomenon occurs in which electrodes of the electrode assembly are not located at exact positions, and the core is unstably separated from the electrode assembly, whereby the winding stability of the electrode assembly is reduced.

That is, the conventional electrode assembly is prone to be defective, which degrades the performance of the battery and reduces safety of the battery, such as electrode breakage and internal short circuit.

### [Prior Art Documents]

### [Patent Documents]

Korean Patent Application No. 10-2021-0058504
Korean Patent Application No. 10-2011-0001058

### SUMMARY OF THE INVENTION

The present invention has been made in view of the above problems, and it is an object of the present invention to provide a core for winding a secondary battery separator film, the core including an upper core and a lower core, wherein an elongated rectangular protrusion is formed on a lower surface of the upper core, an elongated rectangular groove is formed in an upper surface of the lower core, when a separator film is wound, the upper core and the lower core move toward the center from opposite sides, the upper core and the lower core are fastened to each other in the state in which the film is interposed between the protrusion of the upper core and the groove of the lower core, and the separator film is wound on the core by a rotating body.

In accordance with the present invention, the above and other objects can be accomplished by the provision of a core for winding a secondary battery separator film, the core including an upper core having an elongated rectangular protrusion formed on a lower surface thereof and a lower core having an elongated rectangular groove formed in an upper surface thereof, wherein, when the upper core and the lower core are fastened to each other, a separator film is interposed between the protrusion and the groove formed at the core, and the film is wound on the core by rotation of the core.

Two protrusions may be formed on the lower surface of the upper core, two grooves may be formed in the upper surface of the lower core, and each of the protrusions may be inserted into a corresponding one of the grooves.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of the present invention;
FIG. 2 is a side view and a sectional view of the present invention;
FIG. 3 is a perspective view showing a protrusion of an upper core and a groove of a lower core according to the present invention; and
FIG. 4 is a sectional view showing the protrusion and the groove of the core according to the present invention.

### DETAILED DESCRIPTION OF THE INVENTION

Hereinafter, an embodiment of the present invention will be described in detail with reference to the accompanying drawings.

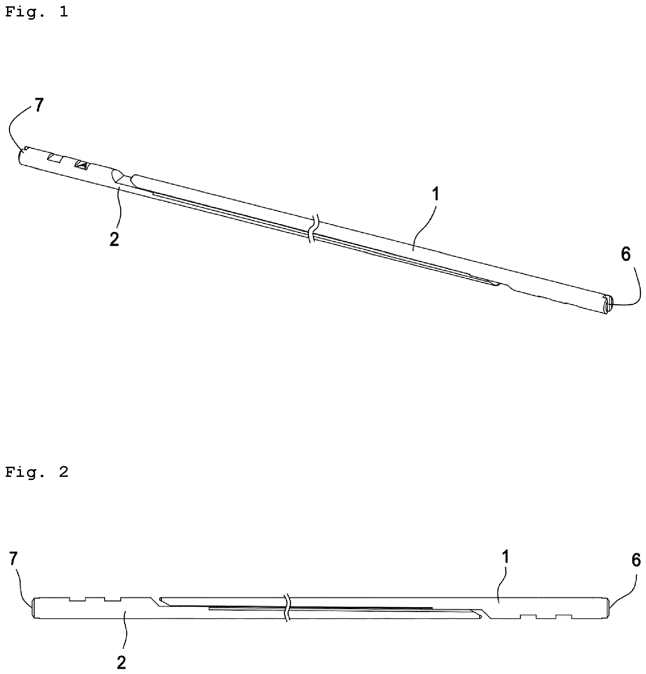

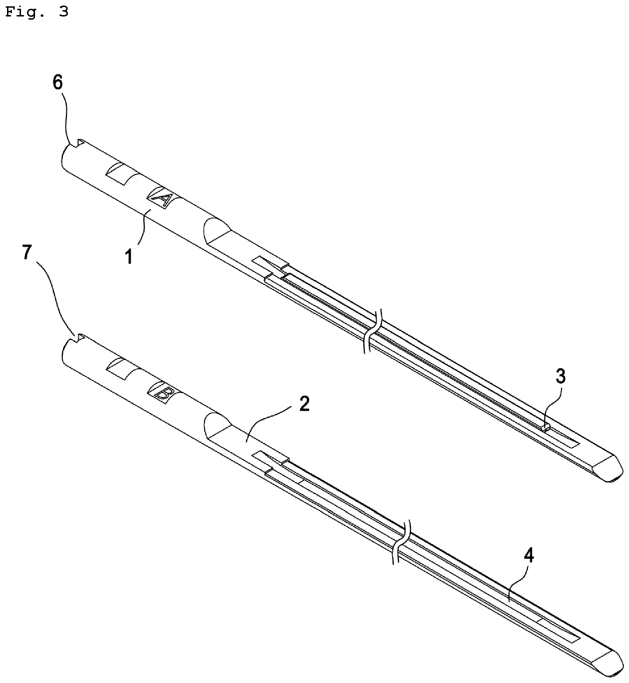

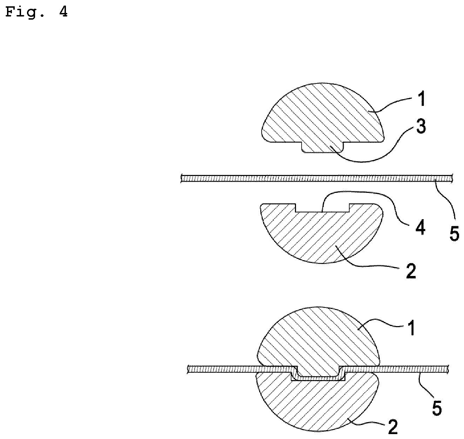

FIG. 1 is a perspective view of the present invention, FIG. 2 is a side view and a sectional view of the present invention, FIG. 3 is a perspective view showing an upper core and a lower core according to the present invention, and FIG. 4 is a sectional view showing a protrusion and a groove according to the present invention. As shown, a core according to the present invention includes an upper core 1 and a lower core 2.

The upper core 1 is provided at one end thereof with a rotary fixture 6 configured to rotate the core, and a rotating body may be inserted into the rotary fixture 6 to rotate the core. An elongated rectangular protrusion 3 is formed on a lower surface of the upper core 1.

The lower core 2 is provided at the other end thereof with a rotary fixture 7 configured to rotate the core, and a rotating body may be inserted into the rotary fixture 7 to rotate the core. An elongated rectangular groove 4 is formed in an upper surface of the lower core 2.

When the upper core 1 and the lower core 2 are fastened to each other, the protrusion 3 formed on the upper core 1 is inserted into the groove 4 formed in the lower core 2. A film 5 is interposed between the protrusion 3 and the groove 4. After the upper core 1 and the lower core 2 are fastened to each other, a rotating body is inserted into the rotary fixtures 6 and 7 formed at both ends thereof in order to rotate the core.

The operation of the present invention configured as described above will be described.

As shown in FIGs. 1 to 3, the core according to the present invention includes an upper core 1 and a lower core 2, wherein a rectangular protrusion 3 is formed on a lower surface of the upper core 1, and a rectangular groove 4 is formed in an upper surface of the lower core 2. As the lower core 2 and the upper core 1 move toward the center from the left and right, respectively, the protrusion 3 of the upper core 1 is inserted into the groove 4 of the lower core 2, whereby the upper core 1 and the lower core 2 are fastened to each other to form a single core.

At this time, a film 5 is inserted between the upper core 1 and the lower core 2 and is wound on the upper core 1 and the lower core 2. Specifically, the film 5 is interposed between the protrusion 3 of the upper core 1 and the groove 4 of the lower core 2 and is wound on the upper core 1 and the lower core 2 by rotation of the rotating body.

In the above embodiment, the upper core 1 is provided with a single protrusion 3, the lower core 2 is provided with a single groove 4, and the protrusion 3 is inserted into the groove 4, whereby the upper core 1 and the lower core 2 are fastened to each other. In another embodiment, the upper core 1 may be provided with two protrusions, the lower core 2 may be provided with two grooves, and each of the protrusions may be inserted into a corresponding one of the grooves, whereby the upper core 1 and the lower core 2 may be fastened to each other.

As is apparent from the above description, the present invention has the effect of stably winding a film by forming a protrusion and a groove at upper and lower cores, respectively, such that the film is wound by being interposed between the protrusion and the groove formed at the upper and lower cores, respectively, when winding the film.

The present invention has the effect of minimizing a twisting phenomenon when winding a sheet type laminate and enabling winding with increased roundness without damaging the sheet type laminate.

Although an embodiment of the present invention has been described above, it will be understood to a person having ordinary skill in the art to which the present invention pertains that various modifications and changes to the present invention are possible by adding, changing, or deleting components without departing from the idea of the present invention described in the appended claims and that the modifications and changes are within the scope of the rights of the present invention.

## Claims

1. A core for winding a secondary battery separator film, the core comprising:
an upper core; and
a lower core, wherein
a rectangular protrusion is formed on a lower surface of the upper core,
a rectangular groove is formed in an upper surface of the lower core,
when a separator film is wound, the upper core and the lower core move toward a center from opposite sides,
the film is located between the protrusion of the upper core and the groove of the lower core,
the upper core and the lower core are fastened to each other into a single core, and
the film is wound on the core by rotation of the core.

2. The core according to claim 1, wherein
two protrusions are formed on the lower surface of the upper core,
two grooves are formed in the upper surface of the lower core, and
each of the protrusions is inserted into a corresponding one of the grooves.
